# EUROPEAN PATENT SPECIFICATION

(11) **EP 3 448 716 B1**
(45) Date of publication and mention of the grant of the patent: **14.04.2021**
(21) Application number: 17719275.4
(22) Date of filing: 26.04.2017
(51) Int. Cl.: B60N 2/28

(54) **A CONNECTING BAR FOR A CHILD RESTRAINT SYSTEM**
PLEUELSTANGE FÜR KINDERRÜCKHALTESYSTEM
BARRE DE RACCORDEMENT POUR UN SYSTÈME DESTINÉ À RETENIR UN ENFANT

(30) Priority: 29.04.2016 SE 1650581
(43) Date of publication of application: 06.03.2019
(73) Proprietor: Holmbergs Safety System Holding AB, 302 45 Halmstad (SE)
(72) Inventor: PERSSON, Jan-Erik, 311 65 Vessigebro (SE)
(74) Representative: AWA Sweden AB
(86) International application number: PCT/EP2017/059914
(87) International publication number: WO 2017/186785

(56) References cited:
- EP-A1- 2 735 474
- WO-A1-2015/151181

## Description

### TECHNICAL FIELD

The present invention relates to a connecting bar for releasable fastening of an object such as child restraint system to at least one mounted anchoring member, and to a child restraint system containing the same.

### BACKGROUND OF THE INVENTION

It is standard practice to secure a child restraint system using releasable "alligator-like" connectors, which are rigidly coupled to the vehicle seat, to fixedly mounted generally U-shaped rod-like anchoring members normally available at the bottom of the backrest of a passenger vehicle seat. ISOFIX systems are standardized in the international standard ISO 13216 that specifies this type of anchoring system for child restraint systems. Examples of this type of connector are given in EP 0619201 and EP 0703113.

Child safety seats, also referred to as child restraint systems, are connected using ISOFIX systems and include cushioned seat shells having seat and back portions, booster cushions with or without side bolsters, and baby carriers. Child safety seats may be integral or may include a seat/booster/baby carrier mounted on a chassis (also called base) which is connected using an ISOFIX system. The connectors may be arranged to be retractable between a use position, where the connectors are projecting from the child safety seat, and a stowed position, where the connectors are withdrawn and at least partly enclosed in the child safety seat.

The connection between the child safety seat and the vehicle seat must be as firm and rigid as possible. It is also desirable to provide for adjustment to varying vehicle seat inclinations, dimensions and shapes in order to ensure safe and secure mounting of the child safety seat.

EP 2551150 relates to a child safety seat assembly including a base with two connector arms which are movable back and forth to extend from and retract into the base. An adjustment mechanism includes a manually operable release actuating assembly disposed between the two connector arms and two latches arranged to lock or unlock the connector arms to the base. The child safety seat assembly is further described to include a driving mechanism operable to actuate the latching hook of a locking fastener provided on each connector arm in order to engage or disengage the anchorage bracket of the vehicle. The driving mechanism includes a manually operable fastener release actuator operatively connected with a linking bar, which in turn is connected with the latching hook. WO 2012/172001 relates to a base, to which a child safety seat can be releasably connected. The base comprises a floor support device, Isofix connectors and a support surface for the child safety seat. The base further comprises a fastening and adjustment mechanism for the child safety seat and the Isofix connectors. The fastening and adjustment mechanism comprises a first handle that is connected to and cooperating with at least one hook and an indicator device and a second handle being connected to a locking device.

In hitherto known mounting systems for child vehicle seats, adjustment of the length by which the connectors protrude from the child safety seat is accomplished by a manually operable mechanism. Thus, there is a need for a more user-friendly and convenient system in order to facilitate and ensure safe mounting of portable child safety seats in vehicles. Moreover, in many of the hitherto known mounting systems the adjustment mechanism is separate from the connectors, often arranged between the connectors, and takes up a great deal of space. Moreover, the mounting system is generally integrated in a chassis on which the child safety seat is placed.

In view of the above, there is a need for a space efficient operating mechanism by which a user may operate a connector.

### SUMMARY OF THE INVENTION

An object of the present invention is to alleviate one or more of the above problems and to provide an improved, user-friendly and convenient adjustable connecting bar for releasable fastening of a child restraint system to a vehicle seat having mounted anchoring members, or to provide a useful alternative.

The object is met by a connecting bar comprising the features of claim 1.

The connecting bar comprises a first and a second elongated bar member telescopically interconnected. The first elongated bar member comprises a coupling device comprising a displaceable hook member for engaging the anchoring member. The coupling device further comprises a displaceable latch member arranged to engage the hook member in a lock position and being displaceable to an unlock position via a translatory motion. The connecting bar comprises an operating mechanism comprising a rotatable manoeuvring shaft and a displacement converter operatively connected to the rotatable manoeuvring shaft and to the displaceable latch member. The displacement converter is arranged to convert a rotating motion of the manoeuvring shaft to the translatory motion and/or to convert the translatory motion to a rotating motion of the manoeuvring shaft.

The displacement converter may be used to effectuate the displacement of the latch member to the unlock position and hence enables a user to effectively at least unlock the coupling device via the rotatable manoeuvring shaft. The displacement converter may be used to effectuate a signal indicative of the status of the coupling device. As the latch member is displaced to the unlock position, the hook member is free to disengage the anchoring member. The displacement converter may thus convert the translatory motion to a rotatable motion, and the rotating of the manoeuvring shaft, its different positions and the angle there between, will effectively be an indication of the status of the coupling device, i.e. that the latch member is not engaging the hook member which indicates that the status of the coupling device is unlocked.

The connecting bar is easy to operate via the displacement converter and the cooperating manoeuvring shaft. The operating mechanism is also space efficient in terms of that it can be located at different positions within the connecting bar. It further enables the connecting bar to be operated via an actuator which is desirable. It is further believed that by using a displacement converter, the telescopic function is enabled, or at least not restricted.

The object can be one or more of the following objects; a consumer product, such as a child restraint system e.g. a child safety seat, a booster cushion or the like, animal related articles such as an animal cage, sports equipment such as skies, vehicle equipment such as wheels, luggage bags or the like. The connecting bar could be used for items which are deemed to be too heavy for safe travels if they are not restrained in a passenger compartment. It is also provided herein an object, such as any one of the objects mentioned above, comprising one or more connecting bars as disclosed herein.

By the term "translatory motion" is herein meant a motion in which all points, or substantially all points, of a moving body move uniformly substantially in the same line or direction, or in the same line or direction.

According to an aspect, the manoeuvring shaft may be formed by a first and a second telescopically interconnected rod. The first rod may thus be displaced with respect to the second rod while still transferring the rotating motion which a user may impart to the manoeuvring shaft. The telescopic connection may be via a male/female connection or via a side by side connection for example. Just a matter of example, the first rod may be slidably arranged in a cavity of the second rod or vice versa. If the cavity is relatively large, the rod comprising the cavity could be described as a sleeve or hollow cylinder. It should be noted that a pipe section is considered to be rod with a through going cavity. The rod may thus have a closed end cavity or an open end cavity, i.e. an aperture extending through the length of the rod. This is advantageous as it is believed that there are few components that can interfere with the specific rod which is inserted into the cavity and especially while it slides in the cavity. It is of course feasible that the manoeuvring shaft has more than two telescopically interconnected rods, such as three or more, which can be arranged to each other as described above.

The first rod may be arranged to telescope synchronously with the first elongated bar member. Optionally or additionally, the second rod may be arranged to telescope synchronously with the second elongated bar member. One purpose of the manoeuvring shaft may be to provide a user with an actuator at the end of the connecting bar opposite to the end of the connecting bar with the coupling device, in such a case it may be advantageous that each elongated bar member has a corresponding portion of the manoeuvring shaft which can be displaced in a synchronous manner.

It may be advantageous to provide the connecting bar, preferably the manoeuvring shaft, with a biasing function such as with one or more biasing members. A biasing member, such as a spring, may be arranged to bias the second rod away from the first rod for example. This could provide a biasing function between the first and the second elongated bar members so that they strive towards being displaced away from each other.

The first rod and/or the second rod may have a polygonal shaped cross section such as triangle (or trigon), quadrilateral (or tetragon), pentagon, hexagon, octagon, nonagon or the like. A quadrilateral cross section, such as a square shaped cross section, is preferred. Preferably, the cooperating rod, e.g. the second rod has a cavity with a corresponding polygonal cross section. It should be noted that the cross section does not necessarily need to be the same. It is enough if the cross sections cooperate in an engaging manner to transfer the rotating motion. This enables the first and the second rod to mate in an engaging manner. A non-circular cross section, such as a polygonal shaped cross section, of the first and/or second rod enables the rotating motion of the specific rod to readily be transferred to the cooperating rod. The non-circular cross section, such as a polygonal, oval or a semi-circular cross section, may be arranged substantially along the entire length of the first and the second rod, or at least along the portion of the respective rods which cooperate in a telescopic manner.

The displacement converter which converts the rotational motion to a translatory motion, may be formed in different ways. Just as a matter of example, the displacement converter may be formed by via threaded surfaces or a gear arrangement. The displacement converter may be formed by a first and a second gear for example.

The first gear may be arranged to the manoeuvring shaft and the second gear may be arranged to interact with the latch member directly, or via at least one intermediate member. The second gear may interact with the latch member directly or indirectly, via an intermediate member having a serrated surface such as a gear rack. For example, the first intermediate member having a serrated surface may be coupled to a second intermediate member which in turn may be connected to a third intermediate member being coupled to the latch member.

The latch member, or the intermediate member, interacting with the gear arrangement and specifically the second gear, may thus be provided with a serrated surface for interacting with a gear. The serrated surface may be formed by protrusions, indents or apertures for example, substantially any surface which can interact, i.e. mesh in a functional manner with the designated gear, will work. The first and/or the second gear may be a bevel gear such as a mitre gear, or a hypoid gear arrangement. Optionally one gear may be a straight cut gear and the other may be a bevel gear. Optionally one gear may be provided with a straight cut gear portion and a bevel gear portion. For example, the second gear may be a straight gear and a bevel gear. The first gear is then preferably a bevel gear. The bevel gear portions of respective gear is then arranged to mesh with each other, and the straight cut gear portion is intended to mesh with the member which is provided with the serrated surface. It should be noted that the terminology straight gear and straight cut gear may be used interchangeably.

If the first gear has a first rotation axis and the second gear has a second rotation axis, the first and the second rotation axes are preferably perpendicular to each other. The first and the second rotation axes may optionally or additionally be substantially intersecting each other, or preferably be intersecting each other. This provides for a very space saving configuration, especially if the second gear is a straight gear and a bevel gear, and the first gear is a bevel gear.

Dependent on the diameters of the gears, the distance of the translatory motion can be adjusted relative to the angle of rotating movement of the manoeuvring shaft. It has been found that the first and the second gear preferably have a diameter of from 4-20 mm. If has further been found that when a gear is a gear of the combined type, i.e. a straight gear and a bevel gear, it may be advantageous to have different diameters on the straight gear and the bevel gear in order to get a ratio function between the different gear portions of the same gear.

The displacement converter may optionally be formed by a threaded surface on the first rod and a threaded surface of the latch member, or on an intermediate member connected to, or in working cooperation with, the latch member. Dependent on the grades of the threads, the speed of the translatory motion can be adjusted.

The displacement converter may be positioned in the first elongated bar member or in the second elongated bar member. It has been found advantageous if the displacement converter is arranged relatively close to the coupling device, as the length of the manoeuvring shaft can easily be extended to an appropriate length. Having the displacement converter in the proximity to the coupling device, or at least in the first elongated bar member, the remaining space inside of the connecting bar may be used for e.g. a latch system for preventing or permitting the first and the second elongated bar members to be displaced relative each other in a telescopic manner.

The manoeuvring shaft may be provided with a first and a second end, wherein the first end is arranged to the displacement converter, preferably the displacement converter is arranged close to the coupling device at an end of the first elongated bar member. The second end may be arranged at the end of the second elongated bar member, preferably at the end of the connecting bar furthest away from the coupling device, so that a user may manipulate the manoeuvring shaft from the outside of the connecting bar, e.g. via an actuator.

Just as a matter of example, the manoeuvring shaft may be operated via a Bowden cable and an actuator. A Bowden cable, or another suitable arrangement for rotating the manoeuvring shaft, can be arranged to the opposite end of the connecting bar to the coupling device, and be connected to the manoeuvring shaft.

### BRIEF DESCRIPTION OF THE DRAWINGS

Non-limiting embodiments of the present invention will be described in greater detail with reference to the accompanying drawings in which;
figures 1a and 1b are perspective views illustrating the mounting of a child restraint system, such as a booster cushion, provided with adjustable connecting bars as disclosed herein, in figure 1a, the connecting bars are in ready-to-use position and in figure 1b, the connecting bars are in use position;
figures 2a and 2b illustrate a type of coupling device which may be used in the connecting bars as disclosed herein;
figures 3a and 3c show a partly transparent view towards the side of one of the connecting bars shown in figures 1a-1b;
figures 3b and 3d show the connecting bar shown in figures 1a-1b with a view from above;
figure 4a shows a perspective view of portions of the connecting bar shown in figures 3a-3d and specifically the displacement converter and the maneuvering shaft;
figure 4b shows in an exploded view portions of the connecting bar shown in figures 3a-3d and specifically the displacement converter and the maneuvering shaft;
figure 5a shows a cross sectional view along the line A-A of a portion of the connecting bar shown in figure 3b in greater detail with the hook member in a locked configuration;
figure 5b shows a cross sectional view along the line A-A of a portion of the connecting bar shown in figure 3b in greater detail with the hook member in an unlocked configuration and;
figure 6 shows an alternative displacement converter with a portion of the maneuvering shaft.

### DETAILED DESCRIPTION

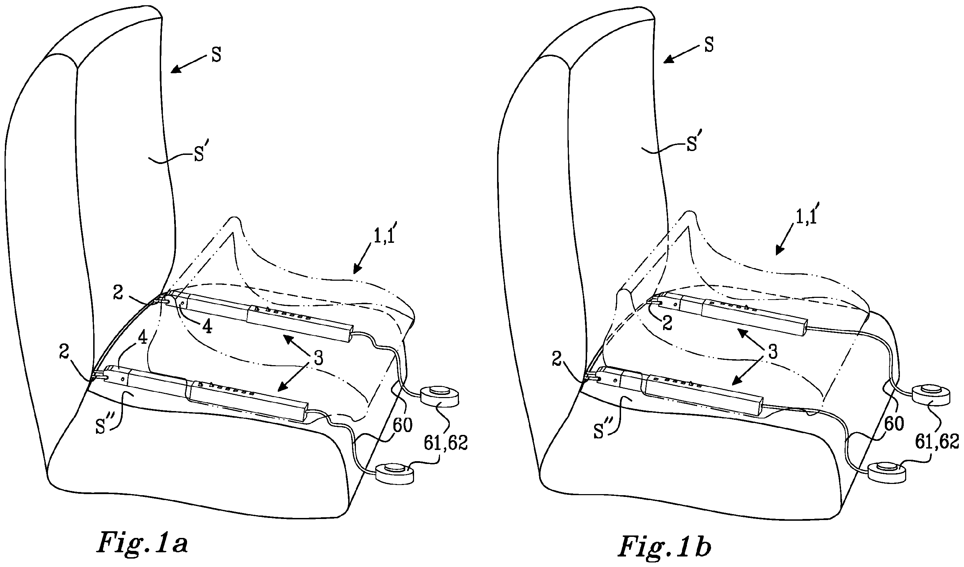

Figures 1a and 1b show a child restraint system 1 in the form of a booster cushion 1' provided with a pair of connecting bars 3 and a vehicle seat S of a vehicle (not shown). The vehicle seat S comprises a backrest S', and a sit cushion S". The vehicle seat A can be a front seat or a rear seat, i.e. any passenger seat of the vehicle. The vehicle may be any vehicle such as an automobile, a lorry, a bus, a boat, a truck, a motor cycle, a helicopter, an air plane, a hoover craft or the like.

The connecting bars 3 enable a releasable fastening of the child restraint system 1, in the form of a booster cushion 1', to the vehicle seat S. The connecting bars 3 are arranged to the child restraint system 1 and can be integrated within the child restraint system 1, or simply connected to the child restraint system 1. More particularly, the connecting bars 3 may be integrated within the bottom part of the child restraint system 1. The connecting bars 3 are fastened to the vehicle seat S via anchoring members 2. The anchoring members 2 are in the shown embodiment U-shaped rod-like elements which normally are available at the lower end of the backrest S', and preferably between the backrest A' and the sit cushion S" of the vehicle seat S. The anchoring members 2 are preferably standardized elements generally referred to as ISOFIX connection elements.

Figure 1a shows the booster cushion 1' with the connecting bars 3 in an extended position while figure 1b shows the booster cushion 1' with the connecting bars 3 in a retracted position. Once the coupling devices 4 of the connecting bars 3 have been fastened to the anchoring members 2, the length of the connecting bars 3 can be adjusted by telescopically displacing a first elongated bar member with respect to a second elongated bar member of the connecting bars 3 by pushing or pulling the booster cushion 1'.

Although only one connecting bar is described in greater detail below, it should be noted that a child restraint system 1 could be provided with one or more connecting bars as disclosed herein. The one or more connecting bars can be identical, similar or completely different from each other. Preferably, provided herein is a pair of connecting bars adapted to be positioned on substantially either side of a child restraint system, such as the child restraint system shown in figures 1a-1b. The connecting bar 3 comprises a coupling device 4, such as an ISOFIX connector, for engaging the anchoring member 2. The coupling device is transformable from a locked configuration to a release configuration by means of an actuator as further described below.

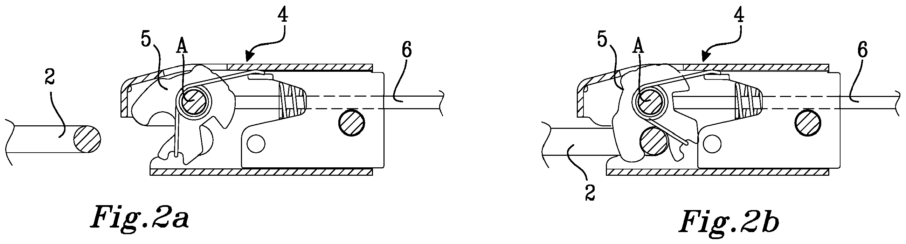

Figure 2a shows a coupling device 4 which may be used in the connecting bar 3 as disclosed herein. The coupling device comprises a hook member 5 which operate as a lock element to the anchoring member 2. The coupling device 4 is transformable from a release configuration, i.e. a configuration in which the hook member 5 may be disengaged from the anchor member 2, to a locked configuration, in which the hook member 5 is in a position to be retained to the anchor member 2. In the shown embodiment, this can be done by displacing the hook member 5, e.g. by introducing a rod-like member, such as the anchoring member 2, into the "mouth" of the coupling device 4, as show in the figures 2a-2b by which the hook member 5 will be changed from the release configuration shown in figure 2a to the locked configuration shown in figure 2b.

The hook member 5 pivots, or rotates, about a pivot axis A to thereby switch the coupling device 4 between the locked configuration and the release configuration. The coupling device 4 comprises a displaceable latch member 6, preferably biased e.g. spring biased, to engage with the hook member 5 to latch the hook member 5 in the locked configuration as shown in Figure 2b. The actuator, as further described below, is operatively connected with the displaceable latch member 6 for selectively disengaging the displaceable latch member 6 from the hook member 5 and is thereby arranged to switch the coupling device 4 at least between the locked configuration and the release configuration.

Just as a matter of example, in cases of two or more connecting bars, the connecting bars may be operatively connected together, e.g. via a transverse bar or any similar arrangement, but may comprise one single actuator arranged to simultaneously transform each coupling device 4 from the locked configuration to the release configuration. In case the child restraint system 1 contains a pair of separate connecting bars 3, each connecting bar 3 may comprise an actuator or maybe operated via one actuator. From a safety aspect, it is advantageous if each connecting bar 3 comprises an actuator. If one actuator is accidently operated and the coupling device 4 is unintentionally transformed from the locked configuration to the release configuration, the child restraint system 1, e.g. booster cushion, is still held in place by the still locked coupling device 4 of the other adjustable connecting bar 3.

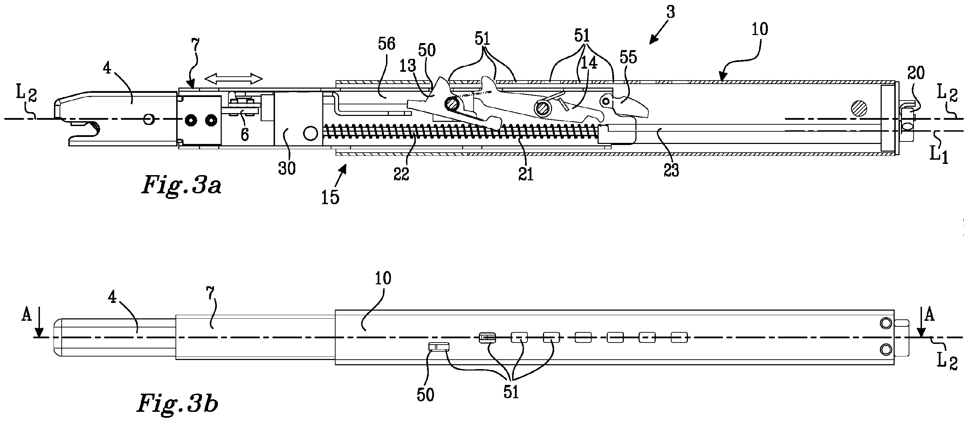

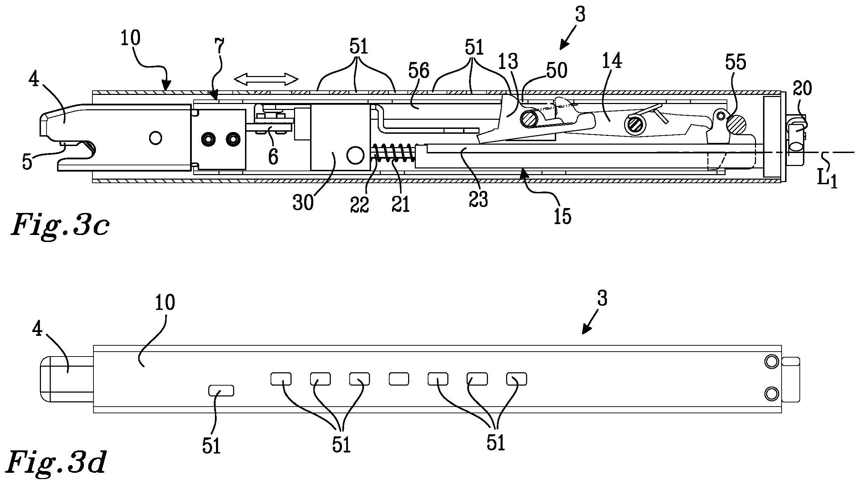

Figures 3a and 3c shows a partly transparent view of the connecting bar 3 and figures 3b and 3d shows the connecting bar 3 with a view from above. Figures 3a-3b shows the connecting bar in the extended position and figures 3c-3d shows the connecting bar in a retracted position. With reference to figures 3a-3c; the connecting bar 3 is provided with a coupling device 4, as illustrated in Figures 2a and 2b, transformable between a locked configuration and a release configuration. The connecting bar 3 comprises a first elongated bar member 7 which is telescopically interconnected to a second elongated bar member 10. The telescopic function of the connecting bar 3 enables the connecting bar to be displaced between the extended and the retracted position and specifically along a longitudinal axis L2. The connecting bar 3 comprising an operating mechanism 15 configured to at least displace the latch member 6 from at least the lock position to the unlock position. Shown in figure 3a and figure 3c and forming parts of the operating mechanism 15 are an actuator 20 which can be a manually operable actuator, a maneuvering shaft 21 and a displacement converter 30. The displacement converter is adapted to convert a rotating motion of the maneuvering shaft 21 to a linear motion, or a translatory motion, imparted to the latch member 6. The translatory motion to the latch member 6 is preferably parallel, or substantially parallel, with the longitudinal axis of the maneuvering shaft 21, and/or with a longitudinal axis of the connecting bar 3. The translatory motion may further be used to effectuate a signal indicative of the status of the coupling device. As the translatory motion may be converted to a rotating motion, thus rotating the maneuvering shaft 21, the rotation may be used, or seen, by a user as an indication that the coupling device is unlocked or locked. Generally; the maneuvering shaft 21 may have a portion extending through the side wall of the connecting bar 3, or be connected to an actuator such as a lever, button or a Bowden cable for example. The rotation of the maneuvering shaft 21 is relayed to the actuator and can thus be used as a status indication of the coupling device, i.e. the hook member and/or the latch member.

The maneuvering shaft is 21 configured to rotate about its longitudinal axis L1 indicated in figure with a dashed line. Upon rotation, the displacement converter 30 converts the rotating motion to a translatory motion to the latch member 6 in a direction indicated with an arrow in figures 3a and 3c. The maneuvering shaft 21 can be operated from the outside of the connecting bar 3 via the actuator 20. The maneuvering shaft 21 is in the shown embodiment formed by a first and a second telescopically interconnected rod 22, 23.

The first and the second telescopically interconnected rods 22, 23 telescope synchronously together with the first and the second elongated bar members 7, 10 when the connecting bar 3 is displaced between the retracted position and the extended position. In this manner, the coupling device 4 may be operated via the maneuvering shaft 21 independently of the position of the first and the second elongated bar members 7, 10. This configuration is space-saving compared to hitherto known connecting bars and provides for a more compact design independently of the relative position between the first and the second elongated bar members 7, 10.

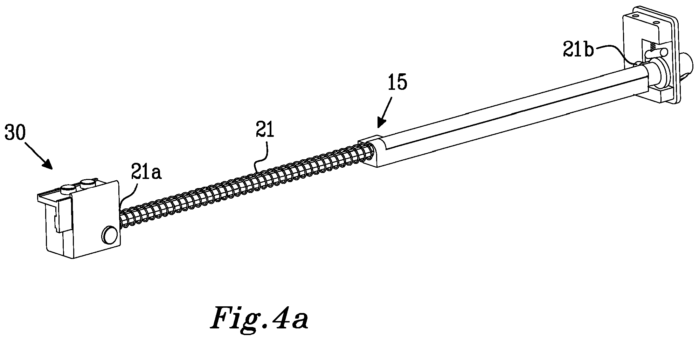

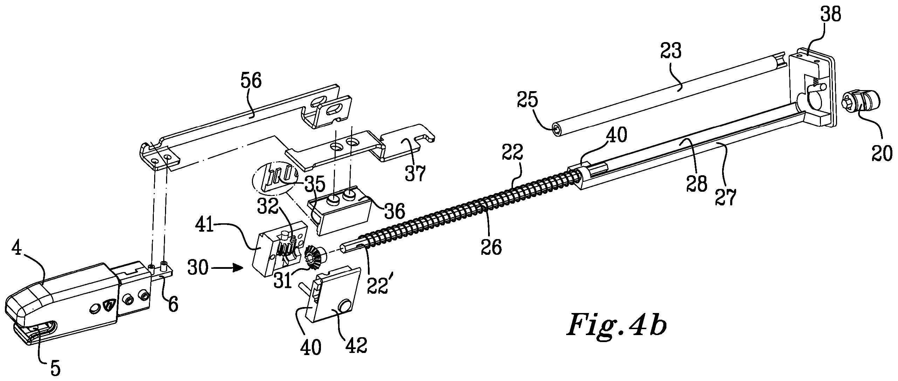

Figure 4a shows at least the operating mechanism 15 in greater detail. Figure 4a shows the displacement converter 30 and the maneuvering shaft 21. Figure 4b shows an exploded view of the operating mechanism 15 and some additional features of an embodiment of the connecting bar 3 which however may not be necessary for the function of the operating mechanism 15. Figure 4b shows the first and the second telescopically interconnected rods 22, 23, the actuator 20 in this case in the form of a lever, and parts of the displacement converter 30. The maneuvering shaft 21 has a first and a second end 21a, 21b.

The first and the second telescopically interconnected rods 22, 23 are arranged to be telescopically connected by having the first rod 22 inserted into the second rod 23. As can be seen, the first rod has the cross section having a polygonal shape, in this case of a quadrilateral cross section, preferably a square cross section, which corresponds to the cross section of the receiving cavity 25 of the second rod 23. This will readily transfer the rotating motion from the second rod 23 to the first rod 22 when a user operates the actuator 20. An end cap 38 is arranged optionally to plug the end of the second elongated bar member 10 (not shown), but primarily to position the second rod 23 of the maneuvering shaft 21 with respect to the second elongated bar member 10. Other ways of positioning the second rod 23 are of course feasible. A spring 26 is superimposed on the first rod 22 and biases the first and the second rod 22, 23 away from each other, and ultimately the elongated bar members 7, 10 (not shown) away from each other. A support portion 27 extending from the end cap 38 is adapted to receive a portion of the second rod 23 and to brace the spring 26. The support portion 27 is slightly longer than the second rod 23 and has a receiving longitudinal groove 28 in which the second rod can rest while being permitted to rotate. It should be noted that the second rod 23 could alternatively be configured to be inserted into a cavity of the first rod 22, or optionally arranged to slide parallel with the first rod 22. The second rod can be a sleeve for the inserted rod for example. In cases were the first rod is arranged to slide in a substantially parallel manner with the second rod, the fist and the second rod preferably are arranged to each other via one or more slidable snap on coupling for example.

The displacement converter 30 is, as mentioned above, adapted to convert a rotating motion to a translatory motion. The displacement converter 30 comprises a first and a second gear 31, 32. The first gear 31 is arranged at an end 22' of the first rod 22. In the shown embodiment, the first gear 31 is a bevel gear. The second gear 32 is in the shown embodiment a gear having a straight cut portion and a bevel portion. It should be noted that other gear configurations are possible such as helical gears e.g. in a crossed configuration. The first and the second gears 31, 32 are arranged in a gear housing 40 formed in this case by a first and a second interconnected house section 41, 42. The first and the second gears 31, 32 are rotateably suspended within the gear housing 40. As is noted of course, the first and the second gears 31, 32 are rotating about axes that are perpendicular to each other and preferably arranged in the same plane, or substantially in the same plane. Hence, the axes of the first and the second gear 31, 32 are preferably intersecting or substantially intersecting, even though being perpendicular with respect to each other. It should be noted that the axes of the first and the second gear 31, 32 may be angled with respect to each other at different angles than being perpendicular to each other, such as from 45° - 135° with respect to each other, just as a matter of example.

The second gear 32 is arranged to mesh with a serrated surface arranged directly on the latch member 6, or as shown in figure 4b on a serrated surface 35, in the form of a gear rack, on an intermediate member 36. The intermediate member 36 is in turn in arranged to operate on the latch member 6 via a second intermediate member 37 and a third intermediate member, in this case a blocking member 56, being connected to the latch member 6. Hence the translatory motion can be imparted directly to the latch member 6 or indirectly via one or more intermediate members.

The operating mechanism may comprise an actuator 20. The actuator 20 is in the shown embodiment a lever connected to the maneuvering shaft 21. The actuator 20, in this case the lever, can be arranged to a cable, such as a Bowden cable. This enables a linear motion of the cable to be translated by means of the lever into a rotational motion of the maneuvering shaft 21. The lever may of course be operated directly by hand if desirable. It should also be noted that the maneuvering shaft may of course optionally or additionally be operated via an electrical motor if desirable. Figures 1a and 1b shows a Bowden cable 60 having an actuator 61 in the form of a rotatable knob 62.

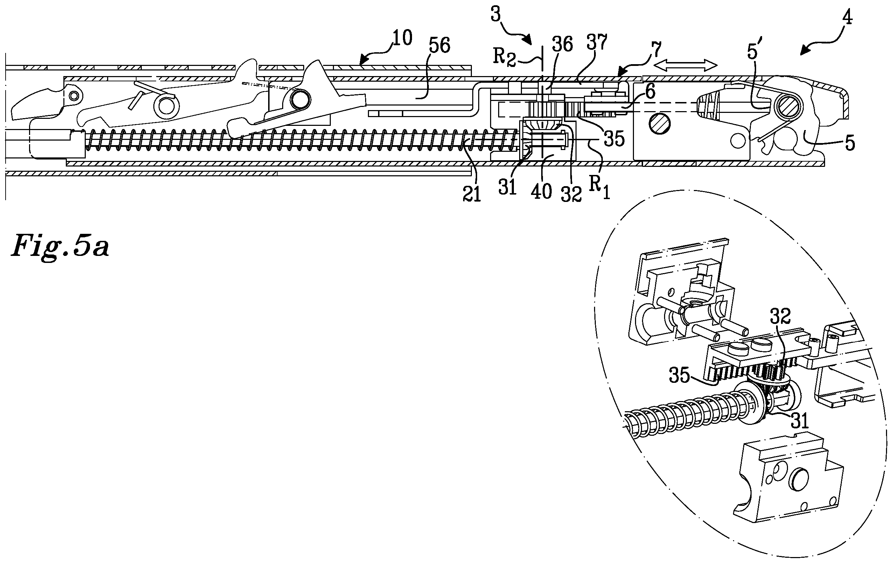

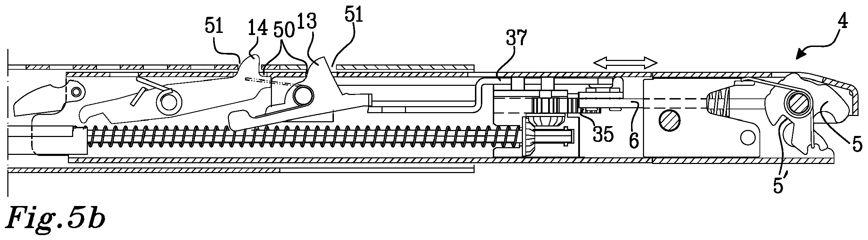

Figure 5a shows a cross section of portions of the connecting bar 3 with a view from the side. Figure 5a shows the first and the second elongated bar member 7, 10, the coupling device 4, parts of the maneuvering shaft 21, the gear house 40, the first and the second gear 31, 32, the serrated surface 35 of the intermediate member 36. Further shown is the second intermediate member 37 and the blocking member 56 connected to the latch member 6. The latch member 6 is positioned in the lock position; engaging the hook member 5 and locking the hook member 5 so that the hook member 5 cannot be disengaged from the anchoring member (not shown). Further shown are the rotation axis R1 of the first gear 31 and a second rotation axis R2 of the second gear 32. The two rotation axes R1, R2 are intersecting each other and forms a plane. Figure 5b shows the cross section of portions of the connecting bar 3 of figure 5a with a view from the side but with the hook member 5 in an unlock position, i.e. in a position in which the anchoring member may either be inserted or removed from "the mouth" of the coupling device.

Figures 5a-5b also illustrate how the displacement converter 30 cooperates with the latch member 6. With reference to both figures 5a and 5b, the latch member 6 can be engaged in a lock position or disengaged to an unlock position with the hook member 5, and more specifically with a groove 5' of the hook member 5. When engaged, i.e. in the lock position, the latch member 6 is in a forward position as can be gleaned from the relative position of the serrated surface 35 and the latch member 6. As a user rotates the maneuvering shaft 21, the displacement converter 30 converts the rotating motion of the maneuvering shaft 21, the serrated surface 35 is displaced via the gear mechanism of the first and the second gears 31, 32 in the direction indicated by the arrow in figure 5a. The latch member 6 is displaced along the longitudinal direction of the connecting bar 3 in a linear motion until at least the latch member 6 is disengaged from the groove 5' of the hook member 5.

As can be seen in figure 5b, the latch member 6 has been displaced and is disengaged from the groove 5' of the hook member 5. As the latch member 6 is disengaged, the hook member 5 is free to rotate to an open position. As also can be seen in how the second intermediate member 37 is cooperating with the first latch 13 in a blocking manner, preventing the first latch 13 from disengaging the aperture 51. Hence not until the hook member 5 has pivoted to a closed position, as shown in figure 5a, can the first latch 13 disengage the apertures 51 of the second elongated bar member 10. In this manner is the connecting bar 3 prevented from being retracted until the hook member 5 is engaging the anchor member (not shown). The first latch 13 does not disengage from the aperture 50 of the first elongated bar member 7.

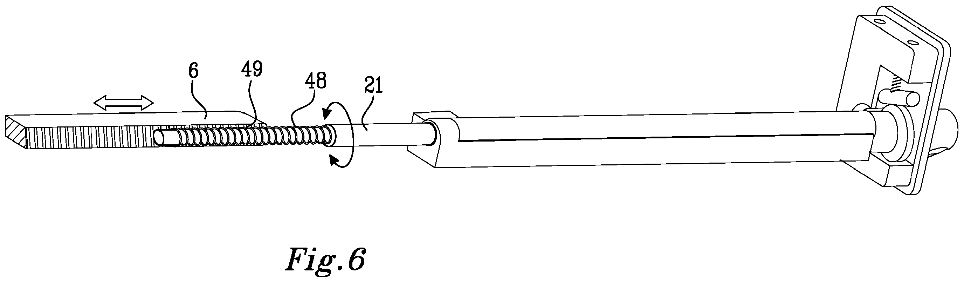

Figure 6 shows an alternative way to convert the rotating motion of the maneuvering shaft to a translatory motion. Figure 6 shows a maneuvering shaft 21 comprising a threaded surface 48. A latch member 6 of a coupling device, such as the coupling device 4 shown in figures 2a-2b, is slidably arranged and comprises a cooperating threaded surface 49. As the maneuvering shaft 21 rotates upon being operated by a user, the latch member 6 is displaced in the longitudinal direction of the maneuvering shaft 21 preferably in a translatory motion. The latch member 6 is thus displaced by 'screwing' the maneuvering shaft 21 using the threaded surfaces although the position of the maneuvering shaft is stationary except in terms of the maneuvering shafts telescopic function when such is present. Again, just as described above, one or more intermediate members may be positioned between the latch member 6 and the maneuvering shaft 21 to relay the translatory motion, or the rotating motion. The displacement converter in this case is formed by the threaded surfaces of the maneuvering shaft 21 and the latch member 6. The displacement converter disclosed above thus converts a rotational motion to a linear motion, or a translatory motion.

Turning back to figures 3a-3d, the connecting bar 3 may comprise a latch system for selectively preventing extension and retraction of the connecting bar. The latch system may be formed and configured in different ways, but by way of example only; such latch system may comprise a first latch 13 which is operatively connected with the coupling device 4 and arranged to lock the connecting bar 3 in the extended end position and to prevent retraction of the connecting bar 3 when the coupling device 4 is in the release configuration. The first latch 13 may further be arranged to allow retraction of the connecting bar 3 when the coupling device 4 is in the locked configuration. The latch system of the connecting bar 3 may additionally comprise a second latch 14 arranged to prevent extension and to allow retraction of the connecting bar 3 when the connecting bar 3 is in the extended end position or in any intermediate position and the coupling device 4 is in the locked configuration.

The second elongated bar member 10 of the connecting bar 3 at least partly encases a part of the first elongated bar member 7. In other embodiments, the first elongated bar member 7 encases the second elongated bar member 10. The first elongated bar member 7 has a side wall, in this case an upper side wall as shown in figures 3c and 3d, having a plurality of apertures 50. In a similar manner, the second elongated element 10 has a side wall provided with a plurality of apertures 51, in this case an upper side wall as shown in figures 3c and 3d. The apertures 51 of the second elongated bar member 10 is arranged to overlap at least one aperture 50 of the first elongated bar member 7 when the connecting bar 3 is in a selected position such as an intermediate position between the retracted position and the extended position. The plurality of apertures 51 of the second elongated element 10 may also comprise an aperture arranged to overlap an aperture 50 of the first elongated bar member 7 when the connecting bar 3 is in the extended end position. The first and the second latches 13, 14 may be biased towards engagement with the one or more apertures, e.g. via a spring.

As can be noticed, one of the apertures 50 of the first elongated bar member 7 is slightly offset with respect to the row of the plurality of apertures 51 of the second elongated bar member 10. One aperture 50 is however aligned with the plurality of apertures 51 of the second elongated bar member 10. The plurality of apertures 51 of the second elongated bar member 10 are preferably aligned with the longitudinal center line of the connecting bar 3, as can be seen in figure 3b for example.

The first and the second latch 13, 14 have protruding portions which may be formed in a saw tooth shape having a ramp side and a block side. The functionality of the connecting bar 3 may thus be controlled by alternately having the first and/or the second latch member 13, 14 engaging the apertures 50, 51. The connecting bar 3 may thus optionally be blocked or permitted from being extended or retracted. These functions may further be operated via the maneuvering shaft in terms of the translatory motion provided by the displacement converter 30 can be in working cooperation with the first and/or second latch 13, 14 via the displacement converter 30 or via one or more intermediate members arranged to the displacement converter 30. In general terms, the displacement converter may thus be arranged to operate one or more additional latches, such as the first and/or the second latch 13, 14 mentioned above, e.g. for blocking the displacement of the first elongated bar with respect to the second elongated bar.

The connecting bar 3 may further comprise a lock mechanism 55 functionally controlled by the relative displacement of the first and second elongated bar members 7, 10 and being operatively connected with the coupling device 4. The lock mechanism 55 may be arranged to prevent the coupling device 4 from transforming to the locked configuration when the connecting bar 3 is in the retracted end position or in any intermediate position. The lock mechanism 55 is arranged to be actuated when the retracted end position of the connecting bar 3 is reached. The lock mechanism 55 is further arranged to be released when the extended end position of the connecting bar 3 is reached. Hence, in an embodiment, the coupling device 4 is allowed, preferably only allowed, to transform to the locked configuration when the connecting bar 3 is in the extended end position. In more general terms, the connecting bar 3 having a coupling device, may thus be provided with a lock mechanism operably connected to the coupling device having a locked configuration and an unlocked configuration, and being adapted to transform to a locked configuration when the connecting bar 3 is in the extended end position, or preferably only when the connecting bar 3 is in the extended end position.

Optionally, when the connecting bar 3 is in the retracted end position, the actuated lock mechanism 55 may force the second latch 14 against the bias of the spring if such is present. The second latch 14 is then forced to engage a blocking member 56. The blocking member 56 may be attached to the displaceable latch member 6. Hence the function and position of the latch member 6 may be related to the second latch 14 if desirable.

Just as a matter of example, when the blocking member 56 is engaged by the second latch 14, displacement thereof is prevented. Since the blocking member 56 is coupled to the displaceable latch member 6, displacement of the latch member 6 is also blocked. By blocking displacement of the latch member 6, the latch member 6 is prevented from engaging and latching the pivotal hook member 5. This means that the coupling device 5 is prevented by the lock mechanism 55 from transforming from the release configuration to the locked configuration when the connecting bar 3 is in the retracted end position or optionally in any intermediate position. The second latch 14 may comprise a hook-shaped end part which is operable by the lock mechanism 55 to engage an aperture of the blocking member 56.

## Claims

1. A connecting bar (3) for a releasable fastening of an object (1) to a mounted anchoring member (2) of a vehicle seat (S), said connecting bar (3) comprising a first and a second elongated bar member (7, 10) telescopically interconnected, wherein said first elongated bar member (7) comprising a coupling device (4) comprising a displaceable hook member (5) for engaging said anchoring member (2), said coupling device (4) further comprises a displaceable latch member (6) arranged to engage said hook member (5) in a lock position and being displaceable to an unlock position via a translatory motion,
**characterized in that**
said connecting bar (3) comprises an operating mechanism (15) comprising a rotatable manoeuvring shaft (21) and a displacement converter (30) operatively connected to said rotatable manoeuvring shaft (21) and to said displaceable latch member (6), wherein
said displacement converter (30) is arranged to convert a rotating motion of said manoeuvring shaft (21) to said translatory motion and/or to convert said translatory motion to a rotating motion of said manoeuvring shaft (21).

2. The connecting bar (3) according to claim 1, wherein said operating mechanism (15) is operable to displace said latch member (6) to said unlock position and/or arranged to effectuate a signal indicative of the status of said coupling device (4).

3. The connecting bar (3) according to any one of the preceding claims, wherein said manoeuvring shaft (21) is formed by a first and a second telescopically interconnected rod (22, 23).

4. The connecting bar (3) according to claim 3, wherein said first rod (22) is slidably arranged in a cavity (25) of said second rod (23).

5. The connecting bar (3) according to claim 3 or 4, wherein said first rod (22) is arranged to telescope synchronously with said first elongated bar member (7) and said second rod (23) is arranged to telescope synchronously with said second elongated bar member (10).

6. The connecting bar (3) according to any one of the claims 3-5, wherein a biasing member, such as a spring (31), is arranged to bias said second rod (23) away from said first rod (22).

7. The connecting bar (3) according to any one of the claims 3-6, wherein said first rod (22) has a non-circular cross section, and preferably said second rod (23) has a cavity with a corresponding non-circular cross section, enabling said first and said second rod (22, 23) to mate in an engaging manner.

8. The connecting bar (3) according to any one of the preceding claims, wherein said displacement converter (30) is formed by a gear arrangement, such as a first and a second gear (31, 32), or threaded surfaces.

9. The connecting bar (3) according to claim 8, wherein said displacement converter (30) is formed by a first gear (31) arranged to said manoeuvring shaft (21) and a second gear (32) arranged to interact with said latch member (6) directly or via at least one intermediate member (36, 37, 56), preferably said first and/or said second gear is a bevel gear, or a hypoid gear arrangement.

10. The connecting bar (3) according to claim 8 or 9, wherein said second gear (32) is a straight gear and a bevel gear.

11. The connecting bar (3) according to any one of the claims 8-10, wherein said first gear (31) has a first rotation axis (R1) and said second gear (32) has a second rotation axis (R2), wherein said first and said second rotation axis (R1, R2) are perpendicular to each other, preferably substantially intersecting each other or preferably intersecting each other.

12. The connecting bar (3) according to any one of the claims 3 to 11, wherein said displacement converter (30) is formed by a threaded surface (48) on said first rod (22) and a threaded surface (49) of said latch member (6).

13. The connecting bar (3) according to any one of the preceding claims, wherein said displacement converter (30) is arranged in said first elongated bar member (7).

14. The connecting bar (3) according to any one of the preceding claims, wherein said manoeuvring shaft (21) comprises a first and a second end (21a, 21b), wherein said first end (21a) is arranged to said displacement converter (30).

15. The connecting bar (3) according to any one of the preceding claims, wherein said manoeuvring shaft (21) is operated via a Bowden cable (60) and an actuator (61), said Bowden cable (60) and said actuator (61) preferably being external to said first and said second elongated bar members (7, 10).

## Patentansprüche

1. Pleuelstange (3) zum lösbaren Fixieren eines Objekts (1) an einem montierten Verankerungselement (2) eines Fahrzeugsitzes (S), wobei die Pleuelstange (3) ein erstes und ein zweites längliches Stangenelement (7, 10), die teleskopisch miteinander verbunden sind, umfasst, wobei das erste längliche Stangenelement (7) eine Kopplungsvorrichtung (4) umfasst, die ein verschiebbares Hakenelement (5) zum Eingreifen in das Verankerungselement (2) umfasst, wobei die Kopplungsvorrichtung (4) ferner ein verschiebbares Riegelelement (6) umfasst, das dazu angeordnet ist, in einer Verriegelungsstellung in das Hakenelement (5) einzugreifen, und über eine Schiebebewegung in eine Entriegelungsstellung verschiebbar ist,
**dadurch gekennzeichnet, dass**
die Pleuelstange (3) einen Funktionsmechanismus (15) umfasst, der eine drehbare Lenkwelle (21) und einen Verschiebungsumwandler (30), der mit der drehbaren Lenkwelle (21) und dem verschiebbaren Riegelelement (6) wirkverbunden ist, umfasst, wobei
der Verschiebungsumwandler (30) dazu angeordnet ist, eine Drehbewegung der Lenkwelle (21) in die Schiebebewegung umzuwandeln und/oder die Schiebebewegung in eine Drehbewegung der Lenkwelle (21) umzuwandeln.

2. Pleuelstange (3) nach Anspruch 1, wobei der Funktionsmechanismus (15) dazu funktionsfähig ist, das Riegelelement (6) in die Entriegelungsstellung zu verschieben, und/oder dazu angeordnet ist, ein Signal auszulösen, das den Status der Kopplungsvorrichtung (4) anzeigt.

3. Pleuelstange (3) nach einem der vorstehenden Ansprüche, wobei die Lenkwelle (21) durch eine erste und eine zweite teleskopisch miteinander verbundene Stange (22, 23) ausgebildet ist.

4. Pleuelstange (3) nach Anspruch 3, wobei die erste Stange (22) verschiebbar in einem Hohlraum (25) der zweiten Stange (23) angeordnet ist.

5. Pleuelstange (3) nach Anspruch 3 oder 4, wobei die erste Stange (22) dazu angeordnet ist, sich gleichzeitig mit dem ersten länglichen Stangenelement (7) teleskopartig zusammenzuschieben, und die zweite Stange (23) dazu angeordnet ist, sich gleichzeitig mit dem zweiten länglichen Stangenelement (10) teleskopartig zusammenzuschieben.

6. Pleuelstange (3) nach einem der Ansprüche 3-5, wobei ein Vorspannungselement, zum Beispiel eine Feder (31) dazu angeordnet ist, die zweite Stange (23) von der ersten Stange (22) weg vorzuspannen.

7. Pleuelstange (3) nach einem der Ansprüche 3-6, wobei die erste Stange (22) einen nicht kreisförmigen Querschnitt aufweist und wobei die zweite Stange (23) vorzugsweise einen Hohlraum mit einem zugehörigen nicht kreisförmigen Querschnitt aufweist, wodurch ermöglicht wird, dass die erste und zweite Stange (22, 23) ineinander eingreifen.

8. Pleuelstange (3) nach einem der vorstehenden Ansprüche, wobei der Verschiebungsumwandler (30) durch eine Zahnradanordnung, zum Beispiel ein erstes und ein zweites Zahnrad (31, 32) oder Gewindeflächen ausgebildet ist.

9. Pleuelstange (3) nach Anspruch 8, wobei der Verschiebungsumwandler (30) durch ein erstes Zahnrad (31), das an der Lenkwelle (21) angeordnet ist, und ein zweites Zahnrad (32), das dazu angeordnet ist, direkt oder über mindestens ein Zwischenelement (36, 37, 56) mit dem Riegelelement (6) zusammenzuwirken, ausgebildet ist, wobei das erste und/oder zweite Zahnrad vorzugsweise eine Kegelrad- oder eine Hypoidradanordnung ist.

10. Pleuelstange (3) nach Anspruch 8 oder 9, wobei das zweite Zahnrad (32) ein Stirnrad oder ein Kegelrad ist.

11. Pleuelstange (3) nach einem der Ansprüche 8-10, wobei das erste Zahnrad (31) eine erste Drehachse (R1) aufweist und das zweite Zahnrad (32) eine zweite Drehachse (R2) aufweist, wobei die erste und die zweite Drehachse (R1, R2) senkrecht zueinander sind, wobei sie vorzugsweise einander erheblich schneiden oder vorzugsweise einander schneiden.

12. Pleuelstange (3) nach einem der Ansprüche 3 bis 11, wobei der Verschiebungsumwandler (30) durch eine Gewindefläche (48) auf der ersten Stange (22) und eine Gewindefläche (49) auf dem Riegelelement (6) ausgebildet ist.

13. Pleuelstange (3) nach einem der vorstehenden Ansprüche, wobei der Verschiebungsumwandler (30) in dem ersten länglichen Stangenelement (7) angeordnet ist.

14. Pleuelstange (3) nach einem der vorstehenden Ansprüche, wobei die Lenkwelle (21) ein erstes und ein zweites Ende (21a, 21b) umfasst, wobei das erste Ende (21a) am Verschiebungsumwandler (30) angeordnet ist.

15. Pleuelstange (3) nach einem der vorstehenden Ansprüche, wobei die Lenkwelle (21) über einen Bowdenzug (60) und ein Stellglied (61) betätigt wird, wobei sich der Bowdenzug (60) und das Stellglied (61) vorzugsweise außerhalb des ersten und zweiten länglichen Stangenelements (7, 10) befinden.

## Revendications

1. Barre de raccordement (3) pour la fixation amovible d'un objet (1) sur un organe d'ancrage monté (2) d'un siège de véhicule (S), ladite barre de raccordement (3) comprenant un premier et un deuxième organe de barre allongé (7, 10) interconnectés de manière télescopique, ledit premier organe de barre allongé (7) comprenant un dispositif d'accouplement (4) comprenant un organe de crochet déplaçable (5) prévu pour venir en prise avec ledit organe d'ancrage (2), ledit dispositif d'accouplement (4) comprenant en outre un organe de verrou déplaçable (6) agencé pour venir en prise avec ledit organe de crochet (5) dans une position de verrouillage et étant déplaçable dans une position de déverrouillage par le biais d'un mouvement de translation,
**caractérisée en ce que**
ladite barre de raccordement (3) comprend un mécanisme d'actionnement (15) comprenant un arbre de manœuvre rotatif (21) et un convertisseur de déplacement (30) raccordé fonctionnellement audit arbre de manœuvre rotatif (21) et audit organe de verrou déplaçable (6),
ledit convertisseur de déplacement (30) étant prévu pour convertir un mouvement de rotation dudit arbre de manœuvre (21) en ledit mouvement de translation et/ou pour convertir ledit mouvement de translation en un mouvement de rotation dudit arbre de manœuvre (21).

2. Barre de raccordement (3) selon la revendication 1, dans laquelle ledit mécanisme d'actionnement (15) peut être actionné pour déplacer ledit organe de verrou (6) dans ladite position de déverrouillage et/ou est prévu pour générer un signal indiquant l'état dudit dispositif d'accouplement (4).

3. Barre de raccordement (3) selon l'une quelconque des revendications précédentes, dans laquelle ledit arbre de manœuvre (21) est formé par une première et une deuxième tige (22, 23) interconnectées de manière télescopique.

4. Barre de raccordement (3) selon la revendication 3, dans laquelle ladite première tige (22) est agencée de manière à pouvoir coulisser dans une cavité (25) de ladite deuxième tige (23).

5. Barre de raccordement (3) selon la revendication 3 ou 4, dans laquelle ladite première tige (22) est prévue pour effectuer un mouvement télescopique de manière synchronisée avec ledit premier organe de barre allongé (7) et ladite deuxième tige (23) est prévue pour effectuer un mouvement télescopique de manière synchronisée avec ledit deuxième organe de barre allongé (10).

6. Barre de raccordement (3) selon l'une quelconque des revendications 3 à 5, dans laquelle un organe de sollicitation tel qu'un ressort (31) est prévu pour solliciter ladite deuxième tige (23) à l'écart de ladite première tige (22).

7. Barre de raccordement (3) selon l'une quelconque des revendications 3 à 6, dans laquelle ladite première tige (22) présente une section transversale non circulaire, et de préférence ladite deuxième tige (23) présente une cavité avec une section transversale non circulaire correspondante, permettant auxdites première et deuxième tiges (22, 23) de s'accoupler en venant en prise l'une avec l'autre.

8. Barre de raccordement (3) selon l'une quelconque des revendications précédentes, dans laquelle ledit convertisseur de déplacement (30) est formé par un agencement d'engrenages, tel qu'un premier et un deuxième engrenage (31, 32), ou par des surfaces filetées.

9. Barre de raccordement (3) selon la revendication 8, dans laquelle ledit convertisseur de déplacement (30) est formé par un premier engrenage (31) agencé au niveau dudit arbre de manœuvre (21) et un deuxième engrenage (32) prévu pour coopérer avec ledit organe de verrou (6) directement ou par le biais d'au moins un organe intermédiaire (36, 37, 56), de préférence ledit premier et/ou ledit deuxième engrenage étant un engrenage conique ou un agencement d'engrenages hypoïdes.

10. Barre de raccordement (3) selon la revendication 8 ou 9, dans laquelle ledit deuxième engrenage (32) est un engrenage droit et un engrenage conique.

11. Barre de raccordement (3) selon l'une quelconque des revendications 8 à 10, dans laquelle ledit premier engrenage (31) présente un premier axe de rotation (R1) et ledit deuxième engrenage (32) présente un deuxième axe de rotation (R2), ledit premier et ledit deuxième axe de rotation (R1, R2) étant perpendiculaires l'un à l'autre, de préférence s'intersectant substantiellement ou de préférence s'intersectant.

12. Barre de raccordement (3) selon l'une quelconque des revendications 3 à 11, dans laquelle ledit convertisseur de déplacement (30) est formé par une surface filetée (48) sur ladite première tige (22) et une surface filetée (49) dudit organe de verrou (6).

13. Barre de raccordement (3) selon l'une quelconque des revendications précédentes, dans laquelle ledit convertisseur de déplacement (30) est agencé dans ledit premier organe de barre allongé (7).

14. Barre de raccordement (3) selon l'une quelconque des revendications précédentes, dans laquelle ledit arbre de manœuvre (21) comprend une première et une deuxième extrémité (21a, 21b), ladite première extrémité (21a) étant agencée au niveau dudit convertisseur de déplacement (30).

15. Barre de raccordement (3) selon l'une quelconque des revendications précédentes, dans laquelle ledit arbre de manœuvre (21) est actionné par le biais d'un câble Bowden (60) et d'un actionneur (61), ledit câble Bowden (60) et ledit actionneur (61) étant de préférence extérieurs audit premier et audit deuxième organe de barre allongé (7, 10).
